# DEMANDE DE BREVET EUROPEEN

(11) **EP 3 338 998 A1**
(43) Date de publication de la demande: **27.06.2018**
(21) Numéro de dépôt: 17306743.0
(22) Date de dépôt: 11.12.2017
(51) Int. Cl.: B29C 49/64, B29C 49/78, B29C 49/12, B29C 49/36, B29C 49/42, B29K 67/00, B29L 31/00

(54) **PROCEDE DE PARAMETRAGE D'UNE STATION DE CHAUFFAGE D'UNE INSTALLATION DE PRODUCTION DE RECIPIENTS**

(30) Priorité: 23.12.2016 FR 1663276
(71) Demandeur: Sidel Participations, 76930 Octeville-sur-Mer (FR)
(72) Inventeur: DELAUNAY, Arnaud, 76930 Octeville-sur-mer (FR); FEUILLOLEY, Guy, 76930 Octeville-sur-mer (FR)
(74) Mandataire: Grassin d'Alphonse, Emmanuel Jean Marie

(57) **Abrégé**

Procédé de paramétrage d'une station de chauffage (14) d'une installation de production (1) d'une succession de recipients (2) a partir de de préformes (4) chauffées comprenant les étapes suivantes :
- determiner un paramètre de préforme,
- determiner un paramètre représentatif de la station de chauffage (14),
- determiner un paramètre de réglage du chauffage permettant a la station de chauffage (14) de chauffer les préformes (4) a ladite temperature de référence a partir du paramètre machine,
- régler ladite station de chauffage (14) selon lesdits paramètres de préforme et de réglage du chauffage,
l'étape de determination du paramètre de réglage de la station de chauffage comprend des étapes suivantes :
- determiner la quantité d'énergie théorique a apporter à une préforme pour chauffer ladite préforme a la temperature de référence,
- chauffer une préforme (4) dans ladite station de chauffage (14) paramétrée,
- mesurer un paramètre liée a la temperature de la préforme (4) chauffée de sorte a determiner l'écart entre la temperature réelle a l'issue de l'étape de chauffage et la temperature de référence,
- ajuster la quantité d'énergie apportée par la station de chauffage en fonction dudit écart pour qu'une préforme chauffée par ladite quantité d'énergie ajustée soit chauffée a ladite temperature de référence en sortie (30) de la station de chauffage (14), le paramètre de réglage du chauffage comprenant ladite quantité d'énergie ajustée.

## Description

L'invention concerne le domaine de la fabrication de récipients (notamment bouteilles, flacons) par formage à partir de préformes en matière plastique, telle que par exemple le polyéthylène téréphtalate (PET).

La fabrication de tels récipients est réalisée dans une installation comprenant une station de chauffage et une machine de formage, équipée d'une succession de moules à l'empreinte du modèle de récipient à former et de dispositifs d'injection correspondant.

La fabrication comporte deux phases principales, à savoir une phase de chauffe des préformes, au cours de laquelle une succession de préformes est chauffée à une température de référence à laquelle les préformes sont dans un état malléable dans lequel elles peuvent être formées, et une phase de formage, au cours de laquelle les préformes chauffées sont transférées chacune dans un moule de la machine de formage et un fluide sous pression est injecté dans chaque préforme par le dispositif d'injection correspondant pour conférer à la préforme la forme finale du récipient. Le fluide sous pression est par exemple un gaz, tel que de l'air. Le formage inclut généralement une phase d'étirage réalisée au moyen d'une tige mobile agencée pour appliquer une force d'étirage sur le fond d'une préforme dans un moule afin d'étirer la préforme selon son axe, ce qui contribue à maintenir la préforme centrée par rapport au moule.

Une installation de production comprend généralement une console à partir de laquelle de nombreux paramètres peuvent être ajustés manuellement : dans la station de chauffage, par exemple : température de chauffe, vitesse de défilement des préformes, puissance d'une ventilation assurant l'évacuation d'une partie de la chaleur ; dans la machine de formage : pression d'injection, vitesse d'étirage, température de régulation thermique du moule, le cas échéant.

Au cours de la phase de chauffage, il est primordial que chaque préforme soit chauffée à une température de référence uniforme d'une préforme à l'autre afin d'assurer un formage ultérieur satisfaisant de la préforme en récipient. La température de référence est comprise entre la température de transition vitreuse et la température de cristallisation du matériau de la préforme. Il est cependant difficile de régler la station de chauffage pour qu'elle chauffe de façon précise et répétée les préformes à la température voulue. En effet, bien que l'on sache en théorie comment alimenter la station de chauffage pour qu'elle délivre une température souhaitée, on constate souvent en sortie de station de chauffage une différence entre la température réglée et la température réelle de la préforme. Cet écart est dû à plusieurs facteurs tels que la déperdition de chaleur dans le four, le coefficient d'absorption de radiations du matériau de la préforme, la chaleur massique de la préforme, le temps d'exposition de la préforme à la chaleur émise par le four qui dépend de la cadence de la station de chauffage, etc. La température de la préforme en sortie de station de chauffage dépend donc à la fois de la station de chauffage et de la préforme elle-même et cette température ne sera pas la même pour un même réglage de la station de chauffage d'un modèle de préforme à un autre. Ainsi, le paramétrage initial de la station de chauffage est compliqué et doit être effectué à nouveau à chaque changement de modèle de préforme. Pour régler la station de chauffage, on procède généralement par tâtonnement en modifiant les paramètres de réglage de la station de chauffage pour réduire petit à petit l'écart entre la température de référence et la température réelle de la préforme jusqu'à arriver à obtenir en sortie de la station de chauffage une préforme chauffée à la température de référence.

Cette opération est fastidieuse et longue à mettre en oeuvre et nécessite la présence d'un opérateur ayant une bonne connaissance de l'installation de production et des modèles de préformes susceptibles d'être introduites dans l'installation. Il serait souhaitable de simplifier et d'automatiser cette opération de paramétrage de la station de chauffage.

Le document WO-2016/012704 décrit un procédé de réglage d'une installation de production de récipients dans lequel une recette de production associée à un modèle de récipient à produire à partir d'un modèle de préforme est sélectionnée dans une base de données et est utilisée pour commander le fonctionnement de l'installation pour produire un récipient conforme au modèle de récipient à partir d'une préforme conforme au modèle de préforme. La recette de production comprend notamment des paramètres de contrôle du four, tels qu'une puissance moyenne à délivrer à des sources de chaleur.

Le procédé inclut une phase de vérification de caractéristiques du récipient obtenu et de correction de la recette en cas de non-conformité d'une de ces caractéristiques. Cependant, cette phase de vérification se fait après avoir réalisé un récipient, c'est-à-dire après la phase de formage, ce qui nécessite de faire fonctionner toute l'installation pour régler la station de chauffage. En outre, l'étape de correction de la recette se fait également par tâtonnement, ce qui est fastidieux, comme indiqué précédemment.

L'un des buts de l'invention est de pallier les inconvénients ci-dessus en proposant un procédé de paramétrage d'une station de chauffage qui peut être automatisé simplement.

A cet effet et selon un premier aspect, l'invention concerne un procédé de paramétrage d'une station de chauffage d'une succession de préformes en matière plastique d'un modèle de préforme donné pour une installation de production d'une succession de récipients d'un modèle de récipient donné à partir de ladite succession de préformes chauffées à une température de référence dans ladite station de chauffage, le procédé de réglage comprenant les étapes suivantes :
- déterminer au moins un paramètre de préforme relatif au modèle de préforme donné,
- déterminer au moins un paramètre machine, représentatif de la capacité de chauffage de la station de chauffage,
- déterminer au moins un paramètre de réglage du chauffage permettant à la station de chauffage de chauffer la succession de préformes conformes audit modèle de préforme donné à ladite température de référence à partir du paramètre machine,
- régler ladite station de chauffage selon lesdits paramètres de préforme et de réglage du chauffage,
dans lequel l'étape de détermination du paramètre de réglage de la station de chauffage comprend au moins une itération des étapes suivantes :
- déterminer la quantité d'énergie théorique à apporter à une préforme conforme au modèle de préforme pour chauffer ladite préforme à la température de référence,
- chauffer au moins une préforme conforme au modèle de préforme dans ladite station de chauffage paramétrée pour apporter ladite quantité d'énergie théorique à ladite préforme,
- mesurer au moins un paramètre liée à la température de la préforme chauffée dans ladite station de chauffage de sorte à déterminer l'écart entre la température réelle de la préforme à l'issue de ladite étape de chauffage et la température de référence,
- ajuster la quantité d'énergie apportée par la station de chauffage en fonction dudit écart pour qu'une préforme chauffée par ladite quantité d'énergie ajustée soit chauffée à ladite température de référence en sortie de la station de chauffage, le paramètre de réglage du chauffage comprenant ladite quantité d'énergie ajustée.

Le procédé de paramétrage selon l'invention permet donc de régler la station de chauffage indépendamment du reste de l'installation de production sans nécessiter de faire fonctionner toute l'installation pour effectuer ce réglage. De plus, l'ajustement de la quantité d'énergie à apporter à la préforme peut se faire par calcul à partir de la quantité d'énergie théorique et de la valeur du paramètre liée à la température de la préforme chauffée mesurée en sortie de la station de chauffage. Ainsi, cet ajustement peut se faire de façon automatisé, ce qui simplifie le paramétrage de la station de chauffage.

Selon une caractéristique du procédé de paramétrage selon l'invention, le paramétrage de la station de chauffage pour appliquer la quantité d'énergie théorique à apporter à la préforme prend en compte un coefficient de rendement initial de la station de chauffage entre l'énergie émise par la station de chauffage et l'énergie effectivement reçue par la préforme, un coefficient de rendement réel étant calculé en fonction de l'écart entre la température réelle de la préforme à l'issue de l'étape de chauffage et la température de référence, ledit coefficient de rendement réel étant pris en compte pour régler la station de chauffage de sorte à apporter la quantité d'énergie ajustée à la préforme.

La prise en compte du coefficient de rendement de la station de chauffage pour l'ajustement de la quantité d'énergie permet d'effectuer le réglage initial de la station de chauffage avec un paramètre tenant déjà compte de la déperdition d'énergie entre l'énergie émise par la station de chauffage et l'énergie effectivement reçue par la préforme, ce qui permet d'obtenir une préforme chauffée à une température proche de la température de chauffage à l'issue de l'étape de chauffage et ainsi minimiser l'ajustement nécessaire. En outre, le coefficient de rendement réel de la station de chauffage étant obtenu par calcul, il peut être déterminé de façon automatisée.

Selon d'autres caractéristiques du procédé de paramétrage selon l'invention :
- la station de chauffage comprend au moins un élément de chauffage apte à émettre une puissance de chauffage vers la préforme, l'ajustement de la quantité d'énergie apportée par la station de chauffage comprenant une modification de ladite puissance de chauffage en fonction du temps d'exposition de ladite préforme à ladite puissance de chauffage émise par l'élément de chauffage.
- la station de chauffage comprend une enceinte, un convoyeur convoyant la succession de préformes le long d'un trajet traversant l'enceinte, les préformes présentant un corps s'étendant selon une direction transversale par rapport au trajet, et une succession d'éléments de chauffage distribués en matrice le long du trajet et selon la direction transversale, lesdits éléments de chauffage étant aptes à émettre une puissance de chauffage maximale correspondant à l'addition des puissances de chauffage de chaque élément de chauffage, le réglage de la station de chauffage pour appliquer la quantité d'énergie théorique comprenant le calcul d'une fraction de ladite puissance de chauffage maximale correspondant à ladite quantité d'énergie théorique en fonction du temps d'exposition d'une préforme aux éléments de chauffage le long du trajet et la répartition de ladite fraction sur au moins une partie desdits éléments de chauffage et le réglage de la station de chauffage pour appliquer la quantité d'énergie ajustée comprenant le calcul d'une fraction ajustée de ladite puissance de chauffage maximale correspondant à ladite quantité d'énergie ajustée en fonction du temps d'exposition d'une préforme aux éléments de chauffage le long du trajet et la répartition de ladite fraction ajustée sur au moins une partie desdits éléments de chauffage, ladite répartition de la fraction ajustée formant un paramètre de réglage de la station de chauffage.

L'ajustement de la quantité d'énergie à apporter à la préforme se fait par la distribution de la puissance de chauffage sur les éléments de chauffage plutôt que par une simple modification de la puissance de chauffage générale, ce qui permet un ajustement plus fin de la quantité d'énergie, en adaptant le profil de température appliqué à la préforme le long de son trajet dans la station de chauffage pour obtenir la température de référence en sortie de la station de chauffage, et une répartition homogène du chauffage de le long de la préforme, c'est-à-dire selon son axe.

Selon d'autres caractéristiques du procédé de paramétrage selon l'invention :
- la répartition d'une fraction de la puissance de chauffage maximale comprend la sélection d'éléments de chauffage à allumer le long du trajet et l'alimentation desdits éléments de chauffage à une puissance de chauffage voisine de leur puissance maximale.
- l'augmentation de la quantité d'énergie au cours de l'étape de réglage de la station de chauffage pour appliquer la quantité d'énergie ajustée comprend la sélection et l'alimentation d'éléments de chauffage supplémentaires et dans lequel la diminution de la quantité d'énergie au cours de l'étape de réglage de la station de chauffage pour appliquer la quantité d'énergie ajustée comprend la sélection et l'extinction d'éléments de chauffage parmi les éléments de chauffage sélectionnés et/ou la modification de la puissance de chauffage d'au moins une partie desdits éléments de chauffage

L'ajustement de la quantité d'énergie se fait par exemple par alimentation ou extinction d'éléments de chauffage plutôt qu'en modifiant la puissance de chauffage de chaque élément de chauffage pour les variations importantes de la quantité d'énergie. Cela permet de faire fonctionner chaque élément de chauffage au plus près de sa puissance de chauffage maximale, ce qui en améliore l'efficacité, et de simplifier le réglage de la station de chauffage puisqu'il suffit d'allumer ou d'éteindre des éléments de chauffage. Pour un ajustement plus fin, on ajuste éventuellement la puissance de chauffage d'un ou plusieurs de ces éléments de chauffage afin d'arriver à la quantité d'énergie voulue exacte.

Selon d'autres caractéristiques du procédé de paramétrage selon l'invention :
- le paramètre d'entrée relatif au modèle de préforme introduit dans l'installation comprend la masse et la hauteur d'au moins une partie de la préforme mesurée selon l'axe (A) de ladite préforme, ladite partie de préforme étant la partie de la préforme destinée à être chauffée dans la station de chauffage.
- le paramètre lié à la température de la préforme chauffée dans la station de chauffage (14) comprend la température mesurée en une zone donnée de la préforme (4).

Choisir la température mesurée en une zone donnée de la préforme comme paramètre lié à la température de la préforme chauffée dans la station de chauffage, par exemple la température mesurée en un point de la préforme, permet de simplifier la mesure du paramètre qui peut être réalisée par des moyens de mesure simples.

Selon un deuxième aspect, l'invention concerne un procédé de réglage initial d'une installation de production d'une succession de récipients d'un modèle de récipient donné à partir d'une succession de préformes en matière plastique d'un modèle de préforme donné, ladite installation comprenant une station de chauffage de ladite succession de préformes, dans laquelle ladite succession de préformes est chauffée à une température de référence, et une machine de formage de ladite succession de préformes chauffées à ladite température de référence, dans laquelle les préformes de ladite succession de préformes sont successivement formées en récipients, le procédé de réglage comprenant les étapes suivantes :
- déterminer au moins un paramètre de réglage du chauffage permettant à la station de chauffage de chauffer la succession de préformes conformes audit modèle de préforme donné à ladite température de référence au moyen du procédé de paramétrage d'une station de chauffage précité,
- déterminer au moins un paramètre de récipient relatif au modèle de récipient à produire à partir dudit modèle de préforme donné,
- déterminer au moins un paramètre de réglage du formage permettant à la machine de formage de réaliser une succession de récipients conformes audit modèle de récipients à partir de ladite succession de préformes chauffées à ladite température de référence,
- régler ladite installation de production selon lesdits paramètres de préforme, de récipient, de réglage du chauffage et de réglage du formage.

Comme indiqué précédemment, le procédé de réglage selon l'invention permet de régler la station de chauffage indépendamment de la machine de formage. Ainsi, le réglage de la station de chauffage ou de la machine de formage ne nécessite pas de faire fonctionner l'ensemble de l'installation.

Selon une autre caractéristique du procédé de réglage, l'étape de détermination d'au moins un paramètre de réglage de la machine de formage comprend le calcul dudit paramètre à partir de formules préenregistrées et desdits paramètres d'entrées, lesdites formules liant au moins le paramètre d'entrée relatif au modèle de préforme au paramètre d'entrée relatif au modèle de récipient à produire en fonction du paramètre de réglage du formage.

La détermination du paramètre de réglage de la station de formage se fait par calcul, ce qui permet d'éviter des étapes de tâtonnement pour obtenir le paramètre permettant d'obtenir le récipient voulu.

Selon un autre aspect, l'invention porte également sur un procédé de réglage initial d'une installation de production d'une succession de récipients d'un modèle de récipient donné à partir d'une succession de préformes en matière plastique d'un modèle de préforme donné, ladite installation comprenant au moins une machine de formage, comprenant au moins une station de formage dans laquelle une préforme de la succession de préformes est formée en un récipient, le procédé de réglage initial comprenant les étapes suivantes :
- déterminer au moins un paramètre de préforme relatif au modèle de préforme introduit dans l'installation et au moins un paramètre de récipient relatif au modèle de récipient à produire à partir dudit modèle de préforme,
- déterminer au moins un paramètre de réglage de la machine de formage permettant de réaliser un récipient conforme audit modèle de récipient à partir d'une préforme conforme audit modèle de préforme,
- régler ladite machine de formage selon lesdits paramètres de préforme, de récipient et de réglage,
dans lequel l'étape de détermination d'au moins un paramètre de réglage de la machine de formage se fait par calcul à partir de formules préenregistrées, lesdites formules utilisant le paramètre de préforme et le paramètre de récipient.

Avantageusement, les formules préenregistrées sont obtenues par régression d'une base de données contenant des informations corrélant une pluralité de paramètres de réglage de la machine de formage et une pluralité de modèles de préforme et une pluralité de modèles de récipients.

Avantageusement, plusieurs paramètres de préforme et de récipient sont déterminés, chaque formule préenregistrée utilisant au moins un desdits paramètres de préforme et au moins un desdits paramètres de récipient pour calculer au moins un paramètre de réglage de la machine de formage.

Avantageusement, les paramètres de préforme comprennent au moins les paramètres suivants pour une préforme comprenant un corps s'étendant selon un axe principal (A) :
- la masse de la préforme,
- l'épaisseur de paroi du corps (6) de la préforme,
- la hauteur d'au moins une partie de la préforme mesurée selon l'axe principal (A),
- le diamètre intérieur du corps (6) de la préforme .

Avantageusement, les paramètres de récipient comprennent au moins les paramètres suivants :
- le volume du récipient,
- le diamètre maximal du récipient,
- le type de produit que le récipient est destiné à recevoir,
- le taux de bi-orientation du récipient,
- au moins une autre dimension du récipient,
- les tolérances acceptables dans les dimensions du récipient.

Avantageusement, au moins certaines des formules préenregistrées utilisent en outre un paramètre machine relatif à la machine de formage pour le calcul du paramètre de réglage de la machine de formage, le paramètre machine étant choisi parmi au moins les paramètres suivants :
- cadence de production de la succession de récipients à partir de la succession de préformes,
- nombre de stations de formage de la machine de formage.

Avantageusement, le paramètre de réglage de la machine de formage est choisi parmi au moins un des paramètres suivants pour une machine de formage comprenant une pluralité de stations de formage comprenant chacune un moule destiné à recevoir une préforme et définissant une cavité de moulage présentant la forme du récipient à produire, un dispositif d'injection pour injecter un fluide sous pression dans la préforme reçue dans le moule et une tige d'étirage mobile par rapport au moule pour étirer la préforme selon son axe principal (A) :
- la pression de présoufflage à laquelle un fluide de formage est introduit dans une préforme placée dans un moule au cours d'une phase de présoufflage,
- la pression de soufflage à laquelle un fluide de formage est introduit dans une préforme placée dans un moule au cours d'une phase de soufflage,
- l'instant du début de l'introduction du fluide de formage dans une préforme,
- la durée d'injection du fluide de formage,
- le débit d'injection du fluide de formage,
- le déplacement de la tige d'étirage,
- la distance entre l'extrémité de la tige d'étirage et le fond de la cavité de moulage,
- le début de la phase de présoufflage par rapport au début de la phase d'étirage, au cours de laquelle la tige d'étirage étire la préforme selon son axe principal (A).

Avantageusement, le procédé de réglage comprend outre une étape de réalisation d'au moins un récipient dans l'installation réglée selon les paramètres de préforme, de récipient et de réglage.

Avantageusement, le récipient réalisé dans l'installation est utilisé pour régler au moins un autre paramètre de l'installation en dehors de la machine de formage.

L'invention porte également sur un procédé de réglage d'une installation de production d'une succession de récipients d'un modèle de récipient donné à partir d'une succession de préformes en matière plastique d'un modèle de préforme donné, ladite installation comprenant une station de chauffage de ladite succession de préformes, dans laquelle ladite succession de préformes est chauffée à une température de référence, et une machine de formage de ladite succession de préformes chauffées à ladite température de référence, dans laquelle les préformes de ladite succession de préformes sont successivement formées en récipients, le procédé de réglage comprenant les étapes suivantes :
- déterminer au moins un paramètre de réglage du chauffage permettant à la station de chauffage de chauffer la succession de préformes conformes audit modèle de préforme donné à ladite température de référence,
- déterminer au moins un paramètre de récipient relatif au modèle de récipient à produire à partir dudit modèle de préforme donné,
- déterminer au moins un paramètre de réglage du formage permettant à la machine de formage de réaliser une succession de récipients conformes audit modèle de récipients à partir de ladite succession de préformes chauffées à ladite température de référence au moyen d'un procédé de réglage initial précité,
- régler ladite installation de production selon lesdits paramètres de préforme, de récipient, de réglage du chauffage et de réglage du formage.

Avantageusement, l'étape de détermination du paramètre de réglage de la station de chauffage comprend au moins une itération des étapes suivantes :
- déterminer la quantité d'énergie théorique à apporter à une préforme conforme au modèle de préforme pour chauffer ladite préforme à la température de référence,
- déterminer au moins un paramètre machine, représentatif de la capacité de chauffage de la station de chauffage,
- chauffer au moins une préforme conforme au modèle de préforme dans ladite station de chauffage paramétrée pour apporter ladite quantité d'énergie théorique à ladite préforme à partir du paramètre machine,
- mesurer au moins un paramètre liée à la température de la préforme chauffée dans ladite station de chauffage de sorte à déterminer l'écart entre la température réelle de la préforme à l'issue de ladite étape de chauffage et la température de référence,
- ajuster la quantité d'énergie apportée par la station de chauffage en fonction dudit écart pour qu'une préforme chauffée par ladite quantité d'énergie ajustée soit chauffée à ladite température de référence en sortie de la station de chauffage, le paramètre de réglage du chauffage comprenant ladite quantité d'énergie ajustée.

L'invention concerne également un programme d'ordinateur comprenant des instructions logicielles, qui, lorsqu'elles sont exécutées par un calculateur de l'installation de production, permettent le calcul de la quantité d'énergie ajustée à apporter à une préforme en fonction de l'écart entre la température réelle de la préforme à l'issue de l'étape de chauffage et la température de référence pour la mise en oeuvre d'un procédé de paramétrage précité.

L'invention concerne également un programme d'ordinateur comprenant des instructions logicielles, qui, lorsqu'elles sont exécutées par un calculateur de l'installation de production, permettent le calcul d'au moins un paramètre de réglage de la machine de formage à partir de formules préenregistrées, pour la mise en oeuvre d'un procédé de réglage initial précité.

D'autres aspects et avantages de l'invention apparaîtront à la lecture de la description qui suit, donnée à titre d'exemple et faite en référence aux dessins annexés, dans lesquels :
- la Fig. 1 est une représentation schématique de dessus d'une installation de production de récipients, comprenant une station de chauffage et une machine de formage, et
- la Fig. 2 est une représentation schématique en coupe de l'installation de production de la Fig. 1.

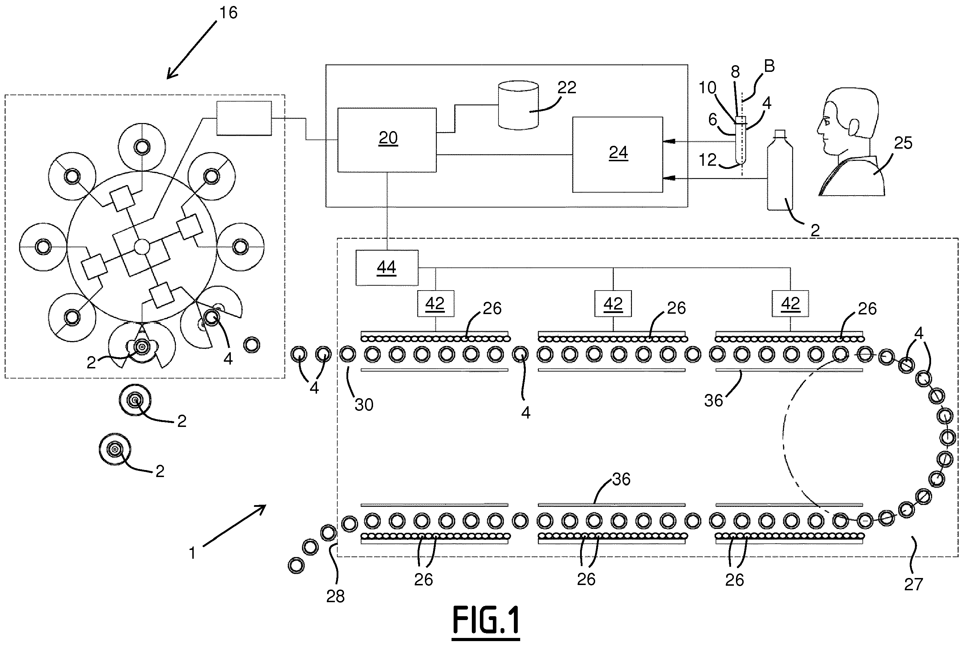

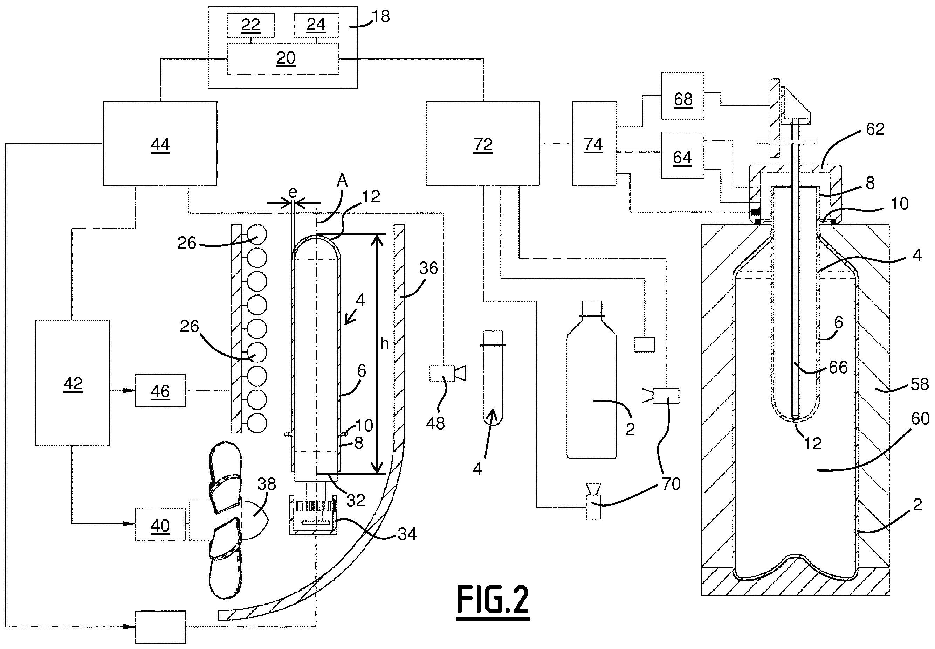

En référence aux Figs. 1 et 2, on décrit une installation de production **1** d'une succession de récipients **2** à partir d'une succession de préformes **4** en matière plastique.

Selon le mode de réalisation représenté sur les figures, chaque préforme 4 comprend un corps **6,** un col **8** et une bague **10.** Le corps 6 présente par exemple la forme d'un tube à essai avec un fond **12** fermé et définit un volume interne s'étendant selon un axe principal **A.** Le col 8 s'étend dans la continuité du corps 6 à l'opposé du fond 12 et forme une ouverture supérieure par laquelle un fluide peut être introduit dans le volume interne de la préforme, comme cela sera décrit ultérieurement. Le col 8 de la préforme présente par exemple la forme définitive qu'il aura dans le récipient 2 formé à partir de la préforme 4 et comprend, par exemple, un filetage sur sa paroi externe pour permettre la fixation d'un bouchon sur le récipient. La bague 10 s'étend entre le corps 6 et le col 8 radialement vers l'extérieur et forme par exemple une bague de transport par laquelle la préforme peut être saisie et transportée, comme cela sera décrit ultérieurement. On définit la hauteur **h** de la préforme 4 comme étant la dimension de la préforme selon son axe principal A et l'épaisseur **e** de la paroi de préforme 4 comme étant l'épaisseur de la paroi mesurée dans le corps 6 de la préforme, cette paroi séparant le volume interne de l'extérieur de la préforme, comme plus particulièrement visible sur la Fig. 2. La forme de préforme donnée ci-dessus ne l'est qu'à titre d'exemple et d'autres formes pourraient être envisagées, tant que celles-ci sont appropriées pour former un récipient par introduction d'un fluide dans la préforme. Ainsi, à titre d'exemple, la préforme pourrait présenter un col lisse, être dépourvue de bague, et/ou avoir d'autres variantes de formes selon divers modèles de préforme susceptibles d'être utilisés dans l'installation de production 1.

La matière plastique de la préforme est par exemple du polyéthylène téréphtalate (PET). La nature de la matière peut varier d'un modèle de préforme à un autre, par exemple du fait de la présence d'additifs, tels que du noir de carbone, qui améliore l'absorption des radiations provoquant le chauffage ou d'un colorant, tel que le dioxyde de titane qui blanchit la préforme et donc reflète une partie du rayonnement ou les pigments colorés. En variante, la matière plastique pourrait être différente du PET, tant que cette matière est susceptible d'être rendue malléable et déformable pour permettre la réalisation d'un récipient par introduction d'un fluide dans la préforme.

Ainsi, un modèle particulier de préforme peut être défini par une pluralité de paramètres, dits paramètres de préforme. Ces paramètres de préforme comprennent notamment :
- caractéristique(s) de la matière plastique de la préforme 4, telle(s) que la présence d'additif(s) ou non ;
- masse de la préforme ;
- dimensions de la préforme : hauteur h de la préforme 4 ou au moins la hauteur de son corps 6 ou la hauteur de la partie de la préforme qui doit être chauffée pour être formée dans l'installation de production, le diamètre intérieur du corps 6
- épaisseur de paroi du corps 6 de la préforme.

Cette liste de paramètres de préforme n'est pas exhaustive et d'autres paramètres peuvent être pris en compte pour le réglage de l'installation, comme cela sera décrit ultérieurement.

L'installation de production 1 comprend au moins une station de chauffage **14** et une machine de formage **16** et une unité de contrôle **18** de l'installation de production 1, qui comprend notamment un calculateur **20** (ou processeur), une mémoire **22** et une console (ou interface graphique**24**) pour l'interaction avec un opérateur **25.**

La station de chauffage 14 est par exemple un four permettant de chauffer une succession de préformes 4 à une température de référence, après paramétrage de la station de chauffage 14, comme cela sera décrit ultérieurement. La température de référence est choisie pour que le corps 6 de chaque préforme 4 en sortie de station de chauffage 14 soit dans un état malléable permettant une déformation du corps 6 de la préforme chauffée afin de former le récipient 2 dans la machine de formage 16. La température de référence est comprise entre la température de transition vitreuse et la température de cristallisation de la matière plastique de la préforme 4. Dans le cas du PET, la température de référence est par exemple voisine de 110°. La valeur de la température de référence peut varier en fonction du produit avec lequel le récipient va être rempli ou en fonction de la technique de remplissage du récipient. Ainsi, la température de référence est différente pour un remplissage à chaud ou pour un produit carbonaté par exemple. On notera que la température de référence correspond à la température à un endroit de référence de la préforme, c'est-à-dire en une zone localisée. En effet, la préforme n'est pas nécessairement chauffée à une température uniforme mais présente un profil de température faisant varier la température de la préforme d'une zone à une autre autour de la température de référence..

Selon le mode de réalisation représenté sur la Fig. 1, la station de chauffage 14 est un four à défilement, dans lequel les préformes 4 sont transportées pour être exposées à une pluralité d'éléments de chauffage **26.** A cet effet, la station de chauffage 14 comprend un dispositif de transport, ou convoyeur, des préformes 4 au travers de la station de chauffage 14 selon un trajet s'étendant dans une enceinte **27** entre une entrée **28** et une sortie **30** de la station de chauffage 14. Le dispositif de transport, ou convoyeur comprend par exemple une succession de supports **32,** chacun étant apte à supporter une préforme 4, montés sur une courroie **34,** ou chaîne, se déplaçant le long du trajet dans la station de chauffage 14. Chaque support **32** est par exemple apte à recevoir une préforme 4 par emmanchement du col 8 sur le support **32,** comme représenté sur la Fig. 2. Chaque support 32 est par exemple mobile en rotation par rapport à la courroie 34 autour d'un axe de rotation confondu avec l'axe principal A d'une préforme 4 lorsque celle-ci est supportée par le support 32. Les éléments de chauffage 26 sont distribués de façon matricielle le long du trajet et selon une direction transversale par rapport au trajet, la direction transversale étant sensiblement parallèle à l'axe principal A des préformes 4 lorsqu'elles sont supportées par les supports 32. En d'autres termes, la station de chauffage 14 comprend une pluralité d'éléments de chauffage 26 répartis le long du trajet et selon la hauteur h des préformes 4 de sorte que toute la hauteur du corps 6 de chaque préforme 4 est exposée aux éléments de chauffage 26 sur le trajet de la préforme 4 dans la station de chauffage. En faisant tourner les préformes 4 autour de leur axe principal A, les supports 32 permettent d'exposer uniformément tout le corps 6 des préformes aux éléments de chauffage 26. Les éléments de chauffage 26 peuvent être répartis de part et d'autre du trajet ou sur un côté seulement de ce trajet, auquel cas une paroi réfléchissante **36** peut être disposée de l'autre côté du trajet pour réfléchir la chaleur vers les préformes 4.

Chaque élément de chauffage 26 peut chauffer à une puissance de chauffage, l'addition des puissances de chauffage des éléments de chauffage définissant la puissance de chauffage maximale de la station de chauffage 14.

Il convient de noter que les éléments de chauffage 26 sont agencés, le cas échéant, pour ne pas soumettre le col 8 et la bague 10 à la chaleur émise par les éléments de chauffage 26. En effet, comme indiqué précédemment, seul le corps 6 de la préforme est formé pour produire le récipient 2. Par conséquent, le col 8 et la bague 10 ne doivent pas être déformés au cours du formage et ne doivent donc pas être chauffés. Pour éviter le chauffage du col 8 et de la bague 10, la station de chauffage 14 peut comprendre un système de ventilation positionné au droit des cols 8 et des bagues 10 pour évacuer la chaleur susceptible d'être absorbée par les cols 8 et les bagues 10. Le dispositif de ventilation comprend par exemple au moins un ventilateur **38** piloté par un moteur **40.**

Chaque élément de chauffage 26 est par exemple formé par une lampe à incandescence émettant un rayonnement infrarouge. Il est cependant entendu que le rayonnement pourrait être qu'infrarouge tant qu'il est susceptible de provoquer la chauffe des préformes 4. Les éléments de chauffage 26 sont commandés par des contrôleurs **42** connectés à une unité de contrôle **44** de la station de chauffage, l'unité de contrôle 44 étant asservie à l'unité de contrôle 18 de l'installation de production. Les contrôleurs 42 permettent d'allumer (ou alimenter) ou d'éteindre chacun des éléments de chauffage 26 individuellement de sorte qu'il est possible de contrôler chacun des éléments de chauffage 26 et décider ainsi lesquels seront utilisés le long du trajet pour chauffer les préformes défilant dans la station de chauffage 14. La répartition des éléments de chauffage 26 allumés ou éteints le long du trajet et selon la direction transversale est généralement désignée par le terme « mapping » (cartographie) des éléments de chauffage 26.

Les contrôleurs 42 peuvent, selon un mode de réalisation, contrôler des variateurs **46** de puissance permettant de faire varier la puissance de chauffage de chaque élément de chauffage 26. Cependant, il est préférable que les éléments de chauffage 26 soient alimentés à une puissance proche de leur puissance maximale lorsqu'ils sont allumés. Ainsi, une variation de puissance de chauffe dans la station de chauffage 14 se fait par allumage ou extinction d'éléments de chauffage 26 plutôt qu'en faisant varier la puissance de chauffage de différents éléments de chauffage 26, bien qu'une telle variation puisse être utilisée pour un ajustement plus fin, comme cela sera décrit ultérieurement.

L'unité de contrôle 44 de la station de chauffage 14 permet également de contrôler le système de ventilation et le défilement des préformes dans la station de chauffage par des modules de contrôles appropriés, comme représenté sur la Fig. 2.

Il est entendu que la station de chauffage 14 décrite ci-dessus n'est qu'un exemple de réalisation et que la station de chauffage 14 pourrait être différente. Ainsi, la station de chauffage 14 pourrait être une station de chauffage par microondes et/ou une station de chauffage dans laquelle les préformes sont chacune exposées à un ou plusieurs éléments de chauffage se déplaçant avec les préformes le long du trajet plutôt que de faire défiler les préformes devant des éléments de chauffage successifs.

En sortie de la station de chauffage 14, un dispositif **48** de mesure d'au moins un paramètre lié à la température d'une préforme est prévu. Par paramètre lié à la température d'une préforme, on entend un paramètre représentatif de la température de la préforme. Par température de la préforme, on entend la température de la préforme à l'endroit de référence de la préforme. En effet, comme indiqué précédemment, la température de la préforme n'est pas nécessairement uniforme. Ainsi, le dispositif 48 de mesure permet de connaître la température des préformes en sortie de la station de chauffage 14. Le paramètre lié à la température de la préforme est par exemple la température d'une zone d'une partie chauffée de la préforme 4. Selon un mode de réalisation, le paramètre lié à la température de la préforme est la température d'un point du corps 6 de la préforme 4. Dans ce cas, le dispositif 48 de mesure est donc agencé pour mesurer la température d'un point du corps 6 de la préforme. Le dispositif 48 de mesure est par exemple formé par un capteur thermique, une caméra thermique ou autre. Le paramètre lié à la température de la préforme pourrait être différent de la température en une zone de la préforme. A titre d'exemple, on pourrait par exemple mesurer la température de l'ensemble du corps 6 de la préforme 4 ou réaliser une analyse spectrale ou autre de la préforme. Cependant, la mesure de la température en un point du corps est un moyen simple et fiable de déterminer la température de la préforme 4 en sortie de la station de chauffage 14.

Avant de chauffer une succession de préformes 4 en vue de réaliser une succession de récipients, il convient de paramétrer la station de chauffage 14 pour qu'elle délivre des préformes à la température voulue, c'est-à-dire à la température de référence, comme cela va à présent être décrit.

A partir du modèle de préforme de la succession de préformes 4 à former en récipients, on détermine une quantité d'énergie théorique à apporter à ce modèle de préforme pour élever la température de la préforme d'une température initiale à la température de référence. Pour ce faire, au moins un des paramètres de préforme, tels que définis précédemment, est pris en compte, par exemple la masse de la préforme, pour déterminer la quantité d'énergie théorique nécessaire pour élever la température de la préforme jusqu'à la température de référence. La détermination de la quantité d'énergie théorique prend également en compte la température de la préforme 4 avant de passer dans la station de chauffage 14. Pour ce faire, l'installation de production comprend par exemple des moyens de mesure de la température dans l'environnement de l'installation, c'est-à-dire de mesure de la température ambiante. En variante, l'installation peut comprendre des moyens pour mesurer directement la température des préformes à l'entrée 28 de la station de chauffage 14.

Le ou les paramètres de préforme peuvent être saisis par l'opérateur 25 au moyen de l'interface 24 et/ou ils peuvent être mesurés par des moyens appropriés à l'entrée 28 de la station de chauffage 16.

A partir des informations ci-dessus, le calculateur 20 est apte à déterminer le paramétrage, ou réglage, de la station de chauffage 14 pour que celle-ci apporte la quantité d'énergie théorique à au moins une préforme 4 circulant dans la station de chauffage 14.

Ce paramétrage tient compte d'au moins un paramètre machine de la capacité de chauffage de la station de chauffage 14. Ce paramètre machine est par exemple la cadence à laquelle la station de chauffage 14 doit chauffer la succession de préformes 4, c'est-à-dire du débit de préformes circulant dans la station de chauffage 14 jusqu'à la sortie 30. En effet, cette cadence détermine la vitesse à laquelle une préforme 4 circule dans la station de chauffage 14 et donc le temps d'exposition maximal de la préforme 4 aux éléments de chauffage 26 le long du trajet de la préforme 4 dans la station de chauffage 14.

Le paramétrage de la station de chauffage 14 tient également compte d'un coefficient de rendement théorique de la station de chauffage 14. Le coefficient de rendement théorique détermine la quantité d'énergie effectivement reçue par une préforme par rapport à la quantité d'énergie émise par les éléments de chauffage 26 de la station de chauffage 14. En effet, comme indiqué précédemment, il y a des déperditions d'énergie dans la station de chauffage 14, par exemple dues en partie au système de ventilation, et la préforme n'absorbe pas nécessairement toute l'énergie qu'elle reçoit. En fonction des spécifications de la station de chauffage 14 et du modèle de préforme, on connaît ainsi le coefficient de rendement théorique de la station de chauffage 14 qui correspond au rapport entre la quantité d'énergie en théorie effectivement reçue par une préforme et la quantité d'énergie en théorie émise par la station de chauffage 14.

A partir du temps d'exposition d'une préforme aux éléments de chauffage 26 et du coefficient de rendement théorique, l'unité de contrôle 18 détermine la fraction de la puissance de chauffage maximale nécessaire pour apporter la quantité d'énergie théorique à une préforme pour la chauffer à la température de référence. L'unité de contrôle détermine ainsi le mapping des éléments de chauffage 26 correspondant à la fraction de la puissance de chauffage maximale pour qu'une préforme 4 circulant dans la station de chauffage 14 reçoive la quantité d'énergie théorique entre l'entrée 28 et la sortie 30 de la station de chauffage 14. Comme indiqué précédemment, le mapping indique quels éléments de chauffage 26 sont allumés, et à quelle puissance de chauffage, et lesquels sont éteints le long du trajet et selon la direction transversale. Le mapping est tel que la fraction de la puissance de chauffage maximale est répartie sur les différents éléments de chauffage 26 pour appliquer un profil de chauffage souhaité sur la préforme, en alimentant, de préférence comme indiqué précédemment, les éléments de chauffage 26 allumés au plus près de leur puissance maximale. La hauteur de la préforme est prise en compte pour déterminer le mapping selon la direction transversale afin d'obtenir le profil de température souhaité le long de la préforme. La répartition des éléments de chauffage 26 allumés le long du trajet est également agencée pour obtenir un chauffage homogène dans l'épaisseur de la paroi du corps de la préforme.

L'unité de contrôle 18 pilote l'unité de contrôle 44 de la station de chauffage pour appliquer le mapping ainsi déterminé par l'intermédiaire des contrôleurs 42.

Une fois ce paramétrage initial réalisé, au moins une préforme de test conforme au modèle de préforme est introduite dans la station de chauffage 14 qui est paramétrée pour apporter la quantité d'énergie théorique à la préforme de test. De préférence, on introduit une pluralité de préformes de test dans la station de chauffage 14 afin d'obtenir des données plus fiables.

A la sortie 30 de la station de chauffage 14, le paramètre lié à la température de la ou de chaque préforme de test est mesuré au moyen du dispositif 48 de mesure afin de déterminer la température réelle de la préforme de test en sortie de la station de chauffage 14. En effet, dans la mesure où le paramétrage initial de la station de chauffage est réalisé en partie à partir de données théoriques (comme les spécifications de la station de chauffage 14 par exemple), il y a de fortes chances que la température de la préforme de test en sortie de station de chauffage 14 ne soit pas égale à la température de référence à laquelle on souhaite chauffer la préforme. Ainsi, en sortie de la station de chauffage 14, on détermine l'écart entre la température réelle de la préforme de test à l'issue de ladite étape de chauffage et la température de référence.

A partir de cet écart, le calculateur peut calculer la quantité d'énergie réelle à apporter à une préforme conforme au modèle de préforme pour la chauffer à la température de référence. Cette quantité d'énergie est appelée quantité d'énergie ajustée. Un tel calcul se fait à partir d'un programme d'ordinateur comportant des instructions logicielles, qui, lorsqu'elles sont exécutées par le calculateur, permettent le calcul de la quantité d'énergie réelle à apporter à une préforme en fonction de l'écart entre la température en sortie de la station de chauffage et la température de référence. Un tel programme d'ordinateur peut être introduit dans le calculateur à partir d'un support physique, tel qu'une clé USB ou autre ou par téléchargement à partir d'un serveur distant.

A partir du calcul de la quantité d'énergie ajustée, le coefficient de rendement réel de la station de chauffage 14 est déterminé et on ajuste ainsi la fraction de la puissance maximale permettant de chauffer la préforme à la température de référence. Cette fraction ajustée est répartie sur les éléments de chauffage 26, c'est-à-dire que le mapping est modifié pour appliquer la quantité d'énergie ajustée aux préformes 4 circulant dans la station de chauffage 14. Si l'écart de température nécessite d'augmenter la quantité d'énergie pour arriver à la quantité d'énergie ajustée, le mapping modifié est tel qu'un plus grand nombre d'éléments de chauffage 26 est allumé pour augmenter la puissance de chauffage. Si l'écart de température nécessite au contraire de diminuer la quantité d'énergie pour arriver à la quantité d'énergie ajustée, le mapping modifié est tel qu'un plus petit nombre d'éléments de chauffage 26 est allumé pour diminuer la puissance de chauffage. Si l'allumage ou l'extinction d'éléments de chauffage 26 ne permet pas d'aboutir à la quantité d'énergie ajustée, la puissance d'au moins une partie des éléments de chauffage peut également être modifiée au moyen des variateurs 46 de puissance afin d'arriver à la valeur exacte souhaitée.

La quantité d'énergie ajustée est ainsi utilisée comme paramétrage de la station de chauffage 14 par l'unité de contrôle 18. Grâce à ce paramétrage de la station de chauffage 14 obtenu par calcul après une étape de test, on s'assure que la succession de préformes, conformes au modèle de préforme pour lequel le paramétrage a été réalisé, s'ont chauffées à la température de référence pendant la production de récipients. Par quantité d'énergie ajustée utilisée comme paramétrage, on entend que le mapping obtenu pour appliquer cette quantité d'énergie est enregistré dans la mémoire 22 et est appliqué à la station de chauffage 14 au cours de la production. D'autres paramètres peuvent être enregistrés, tels que le coefficient de rendement ajusté, la fraction ajustée de la puissance de chauffe générale, etc. On notera que la détermination du mapping se fait également par un programme d'ordinateur.

Selon un mode de réalisation, le procédé de paramétrage de la station de chauffage 14 peut en outre comprendre une nouvelle étape de test au cours de laquelle au moins une nouvelle préforme de test conforme au modèle de préforme est chauffée dans la station de chauffage 14 paramétrée pour appliquer la quantité d'énergie ajustée. A l'issue de cette étape de chauffe, on mesure le paramètre lié à la température de la préforme de test en sortie de la station de chauffage 14. On détermine alors l'écart entre la température mesurée et la température de référence. Si l'écart de température est nul, cela signifie que le paramétrage de la station a été correctement effectué. Si on constate un écart non nul, on recalcule une quantité d'énergie ajustée et on recommence les étapes décrites précédemment pour paramétrer la station de chauffage 14. Ces étapes peuvent être répétées jusqu'à ce que la température de la préforme en sortie de la station de chauffage 14 soit sensiblement égale à la température de référence.

Le procédé de paramétrage décrit ci-dessus peut être entièrement automatisé et mis en oeuvre par l'unité de contrôle 18 au moyen de programmes d'ordinateur. En outre, il peut être mis en oeuvre indépendamment du réglage du reste de l'installation, notamment de celui de la machine de formage 16, qui va être décrit ultérieurement. Ainsi, le paramétrage de la station de chauffage 14 et le réglage de la machine de formage 16 peuvent être effectués en parallèle, ce qui permet des gains de temps non négligeables. En outre, si l'on constate un défaut dans la production de récipient, la station de chauffage 14 et/ou la machine de formage 16 peuvent être à nouveau réglées sans défaire le réglage du reste de l'installation.

La machine de formage 16 permet de former la succession de préformes 4 chauffées à la température de référence en une succession de récipients 2.

A cet effet, l'installation de production comprend des moyens de transfert (non représentés) de la succession de préformes 4 en sortie de la station de chauffage 14 à la machine de formage 16. Ces moyens de transfert sont par exemple formés, de façon connue, par une roue de transfert, mobile en rotation autour d'un axe de rotation, agencée pour saisir les préformes 4, par exemple par la bague 10 des préformes, à la sortie 30 de la station de chauffage 14 et les transférer à une entrée **50** de la machine de formage 16. L'axe de rotation de la roue de transfert est par exemple parallèle à l'axe principal A des préformes lorsqu'elles sont transportées par la roue de transfert.

La machine de formage 16 est par exemple également formée par une roue de formage **52** déplaçant en rotation une pluralité de stations de formage **54** de l'entrée 50 à une sortie **56,** à laquelle une succession de récipients 2 formés à partir des préformes 4 est extraite, comme représenté sur la Fig. 1. L'axe de rotation de la roue de formage 52 est par exemple sensiblement parallèle à l'axe principal A des préformes 4 lorsqu'elles sont transportées par la roue de formage 52.

Chaque station de formage 54 comprend un moule **58** formant une cavité de moulage **60** présentant la forme du récipient 2 à former et agencé pour recevoir une préforme 4 de façon à ce que le corps 6 de la préforme 4 s'étende dans la cavité de moulage 60, comme représenté sur la Fig. 2. Chaque moule 58 est par exemple formé de plusieurs parties mobiles entre une position ouverte, dans laquelle le moule 58 peut recevoir une préforme 4 et libérer un récipient 2, respectivement à l'entrée 50 et à la sortie 56, et une position fermée, dans laquelle la cavité de moulage 60 est hermétiquement fermée par la préforme 4 entre les entrée 50 et sortie 56. Lorsqu'une préforme est reçue dans le moule, le corps 6 s'étend dans la cavité de moulage 60 et le col 8 s'étend en saillie du moule 58 en dehors de la cavité de moulage 60, comme représenté sur la Fig. 2.

Chaque station de formage 54 comprend en outre un dispositif d'injection **62** agencé pour injecter un fluide dans le volume interne de la préforme 4 placée dans le moule 58 de la station de formage 54 de sorte que le fluide déforme la préforme 4 et que celle-ci acquière la forme de la cavité de moulage 60, c'est-à-dire que la préforme soit formée en récipient sous l'action du fluide. Selon un mode de réalisation, le fluide est par exemple un gaz pressurisé, par exemple de l'air sous pression. Dans ce cas, le dispositif d'injection 62 est par exemple formé par une tuyère et d'une ou plusieurs vannes **64** permettant de contrôler l'injection du fluide dans la préforme. La pression à laquelle le fluide est injecté est réglable. A titre d'exemple et façon connue, l'installation de formage comprend un réservoir d'air sous pression à une première pression et un réservoir d'air sous pression à une deuxième pression, les vannes 64 permettant d'injecter sélectivement l'air à la première pression ou à la deuxième pression.

Selon un mode de réalisation, représenté sur la Fig. 2, chaque station de formage 54 comprend en outre une tige d'étirage **66** mobile par rapport au moule 58 selon une direction confondue avec l'axe principal A de la préforme 4 lorsqu'elle est placée dans le moule 58. La tige d'étirage 66 est agencée pour exercer un appui sur le fond 12 de la préforme 4 afin d'étendre celle-ci selon la direction axiale. Plus particulièrement, la tige d'étirage 66 étend par exemple la préforme 4 jusqu'à ce que le fond 12 entre en contact avec le fond de la cavité de moulage 60. Le déplacement de la tige d'étirage 66 est commandé par un actionneur **68.**

La machine de formage 16 peut en outre comprendre des moyens de contrôles de la qualité des récipients 2 en sortie 56 de la machine de formage 16. De tels moyens comprennent par exemple des caméras **70** pointant vers le corps et/ou le fond des récipients 2 ou autre, comme représenté sur la Fig. 2.

La machine de formage 16 est pilotée de manière automatique par une unité de contrôle **72** dédiée asservie à l'unité de contrôle 18 de l'installation de production. Cette unité de contrôle 72 pilote des contrôleurs **74** associés à chacune des stations de formage 54 pour commander les vannes 64 et l'actionneur 68 de la tige d'étirage 66.

Comme indiqué précédemment, chaque station de formage 54 reçoit une préforme 4 à l'entrée 52 de la machine de formage 16. Le moule 58 est fermé et le dispositif d'injection 62 est positionné atour du col 8 de la préforme 4. Le fluide sous pression est alors injecté dans la préforme 4 pour former celle-ci en un récipient. Selon un mode de réalisation, deux phases d'injection sont prévues :
- une première phase, dite phase de présoufflage, au cours de laquelle le fluide est injecté à une première pression, dite pression de présoufflage, par exemple de l'ordre de 4 à 16 bars, de façon à appliquer la paroi de la préforme 4 contre la paroi de la cavité de moulage 60,
- une deuxième phase, dite phase de soufflage, au cours de laquelle le fluide est injecté à une deuxième pression, dite pression de soufflage, par exemple de l'ordre de 20 à 30 bars, de façon à plaquer la paroi du récipient contre la paroi de la cavité de moulage 60 afin que tous les détails (nervures, motifs, etc.) de la paroi de la cavité de moulage 60 soient bien imprimés sur la paroi du récipient 2.

Le cas échéant, le formage du récipient 2 comprend en outre une phase d'étirage au moyen de la tige d'étirage 66, cette phase débutant avant ou après le début de la première phase d'injection et se poursuivant au cours de cette première phase jusqu'à ce que le fond 12 de la préforme 2 entre en contact avec le fond de la cavité de moulage 60.

Ces phases se produisent pendant que la station de formage 54 se déplace de l'entrée 52 à la sortie 56. En sortie 56, le moule 58 est ouvert et un récipient formé est extrait du moule.

Le récipient 2 obtenu est conforme à un modèle de récipient qui peut être défini par une pluralité de paramètres, dits paramètres de récipient. Ces paramètres de récipient comprennent notamment :
- le volume du récipient,
- le diamètre maximal du récipient,
- le type de produit que le récipient est destiné à recevoir,
- le taux de bi-orientation du récipient, correspondant au produit du rapport d'allongement axial due à l'étirage et du rapport d'allongement radial due à l'injection du fluide sous pression,
- au moins une autre dimension du récipient, telle que la hauteur du récipient,
- les tolérances acceptables dans les dimensions du récipient.

Le récipient obtenu à l'issue du formage peut ensuite être étiqueté, rempli et bouché par exemple au moyen de stations prévues à cet effet dans l'installation de production.

Avant de former une succession de récipients 2 à partir d'une succession de préformes, il convient de régler la machine de formage 16 pour qu'elle forme des récipients conformes à un modèle de récipient souhaité à partir de préformes 4 d'un modèle de préforme donné, comme cela va à présent être décrit.

Le réglage de la machine de formage 16 comprend un réglage initial de la machine de formage, afin que la machine de formage forme après le réglage initial des récipients approchant du modèle de récipient puis un réglage affiné permettant de régler la machine de façon à ce qu'elle forme des récipients conformes au modèle de récipient.

Le réglage initial de la machine de formage 16 consiste à déterminer au moins un paramètre de réglage du soufflage permettant à la machine de soufflage de former un récipient conforme au modèle de récipient à partir d'une préforme 4 conforme à un modèle de préforme donné et chauffée à la température de référence.

Cette détermination est obtenue par calcul au moyen du calculateur 20 de l'unité de contrôle 18. Le calcul est effectué à partir de formules préenregistrées dans la mémoire 22 de l'unité de contrôle et utilisant au moins un paramètre de préforme et au moins un paramètre de récipient. Plus particulièrement, les formules permettent de calculer la valeur d'au moins un paramètre de réglage de la machine de soufflage 16 en fonction d'au moins un paramètre de préforme et d'au moins un paramètre de récipient. Certaines formules intègrent également des paramètres « machine » relatifs au fonctionnement de la machine, tels que la cadence à laquelle la machine de formage 16 produit des récipients, le nombre de stations de formage de la machine de formage, etc. Les calculs sont effectués par un programme d'ordinateur comportant des instructions logicielles, qui, lorsqu'elles sont exécutées par le calculateur, permettent les calculs du ou des paramètres de réglage à partir des formules préenregistrées. Un tel programme d'ordinateur peut être introduit dans le calculateur à partir d'un support physique, tel qu'une clé USB ou autre ou par téléchargement à partir d'un serveur distant.

Les paramètres de réglage de la machine de soufflage 16 comprennent par exemple :
- la pression de présoufflage,
- la pression de soufflage,
- l'instant du début de l'introduction du fluide de formage dans une préforme,
- la durée d'injection du fluide de formage,
- le débit d'injection du fluide de formage,
- le déplacement de la tige d'étirage 66, par exemple la course du déplacement, la vitesse de déplacement e/ou le profil temporel du déplacement,
- la distance entre l'extrémité de la tige d'étirage 66 et le fond de la cavité de moulage 60,
- le début de la phase de présoufflage par rapport au début de la phase d'étirage.

Les formules sont obtenues par régression d'une base de données contenant des informations corrélant une pluralité de paramètres de réglage de la machine de formage 16 à une pluralité de modèles de préforme et à une pluralité de modèles de récipients. De telles informations sont connues sous le nom de « recettes » qui comprennent chacune les valeurs de paramètres de réglage de la machine de formage pour produire un modèle particulier de récipient à partir d'un modèle particulier de préforme dans une machine de soufflage donnée. De telles recettes sont par exemple décrites dans le document WO-2016/012704. Par régression à partir de l'ensemble de recettes stockées dans une base de données, on obtient des formules permettant d'obtenir la valeur des paramètres de réglage par calcul. Ainsi, les paramètres de réglage peuvent être calculés pour des modèles de récipient et/ou des modèles de préforme, même si ces modèles ne sont pas présents dans la base de données, grâce aux informations contenues dans la base de données pour d'autres modèles de récipient et de préformes.

A titre d'exemple, la pression de présoufflage, la pression de soufflage et/ou la durée d'injection du fluide d'expansion peuvent être calculés en fonction des dimensions de la préforme, des dimensions du récipient, du volume du récipient et de la cadence de la machine de formage 16.

Concrètement, un opérateur 25 renseigne un modèle de récipients à produire et un modèle de préformes à partir desquels les récipients doivent être produits au moyen de l'interface 24. Le calculateur 20 effectue alors les calculs permettant de déterminer les paramètres de réglage de la machine de formage 16 à partir des formules stockées dans la mémoire 22 en fonction des paramètres de préforme et de récipient et des paramètres machine. L'unité de contrôle 18 transmet ces paramètres de réglage pour que l'unité de contrôle 74 de la machine de formage 16 les applique.

Le réglage initial ainsi effectué, on produit au moins un récipient de test à partir d'une préforme chauffée à la température de référence. Le récipient test obtenu est proche du modèle de récipient voulu.

Le ou les récipients test peuvent être utilisés pour régler d'autres paramètres de l'installation de production, par exemple pour régler les stations de transfert des récipients d'une unité à une autre unité ou l'unité d'étiquetage ou de remplissage ou de bouchage d'un récipient. En effet, le récipient test étant proche du modèle voulu, il est suffisant pour régler des éléments ne nécessitant pas que le récipient soit parfaitement conforme au modèle de récipient souhaité.

En parallèle de ces réglages complémentaires, le réglage de la machine de formage 16 est affiné pour que la machine de formage produise des récipients conformes au modèle de récipient voulu. Ce réglage est effectué en mesurant au moins une caractéristique du récipient de test obtenu à l'issue du réglage initial, en déterminant un écart entre cette caractéristique et la valeur attendue pour le modèle et corrigeant au moins un paramètre de réglage de la machine de formage 16 en conséquence afin de rendre cet écart nul.

Ainsi, les réglages complémentaires peuvent être effectués sans attendre que la machine de formage 16 soit complètement réglée, ce qui permet des gains de temps non négligeables.

La machine de formage ci-dessus n'a été décrite qu'à titre d'exemple et d'autres type de machines de formage pourraient être réglées au moyen du procédé décrit ci-dessus. Par exemple, la machine de formage pourrait ne pas comprendre de roue de formage ou de tiges d'étirage. Le fluide injecté pourrait être autre que de l'air, etc.

## Revendications

1. Procédé de paramétrage d'une station de chauffage (14) d'une succession de préformes (4) en matière plastique d'un modèle de préforme donné pour une installation de production (1) d'une succession de récipients (2) d'un modèle de récipient donné à partir de ladite succession de préformes (4) chauffées à une température de référence dans ladite station de chauffage (14), le procédé de réglage comprenant les étapes suivantes :
- déterminer au moins un paramètre de préforme relatif au modèle de préforme donné,
- déterminer au moins un paramètre machine, représentatif de la capacité de chauffage de la station de chauffage (14),
- déterminer au moins un paramètre de réglage du chauffage permettant à la station de chauffage (14) de chauffer la succession de préformes (4) conformes audit modèle de préforme donné à ladite température de référence à partir du paramètre machine,- régler ladite station de chauffage (14) selon lesdits paramètres de préforme et de réglage du chauffage,
**caractérisé en ce que** l'étape de détermination du paramètre de réglage de la station de chauffage comprend au moins une itération des étapes suivantes :
- déterminer la quantité d'énergie théorique à apporter à une préforme conforme au modèle de préforme pour chauffer ladite préforme à la température de référence,
- chauffer au moins une préforme (4) conforme au modèle de préforme dans ladite station de chauffage (14) paramétrée pour apporter ladite quantité d'énergie théorique à ladite préforme,
- mesurer au moins un paramètre liée à la température de la préforme (4) chauffée dans ladite station de chauffage (14) de sorte à déterminer l'écart entre la température réelle de la préforme à l'issue de ladite étape de chauffage et la température de référence,
- ajuster la quantité d'énergie apportée par la station de chauffage en fonction dudit écart pour qu'une préforme chauffée par ladite quantité d'énergie ajustée soit chauffée à ladite température de référence en sortie (30) de la station de chauffage (14), le paramètre de réglage du chauffage comprenant ladite quantité d'énergie ajustée.

2. Procédé de paramétrage selon la revendication 1, dans lequel le paramétrage de la station de chauffage (14) pour appliquer la quantité d'énergie théorique à apporter à la préforme prend en compte un coefficient de rendement initial de la station de chauffage (14) entre l'énergie émise par la station de chauffage (14) et l'énergie effectivement reçue par la préforme (4), un coefficient de rendement réel étant calculé en fonction de l'écart entre la température réelle de la préforme (4) à l'issue de l'étape de chauffage et la température de référence, ledit coefficient de rendement réel étant pris en compte pour régler la station de chauffage (14) de sorte à apporter la quantité d'énergie ajustée à la préforme (4).

3. Procédé de paramétrage selon la revendication 1 ou 2, dans lequel la station de chauffage (14) comprend au moins un élément de chauffage (26) apte à émettre une puissance de chauffage vers la préforme (4), l'ajustement de la quantité d'énergie apportée par la station de chauffage (14) comprenant une modification de ladite puissance de chauffage en fonction du temps d'exposition de ladite préforme (4) à ladite puissance de chauffage émise par l'élément de chauffage (26).

4. Procédé de paramétrage selon la revendication 3, dans lequel la station de chauffage (14) comprend une enceinte (27), un convoyeur convoyant la succession de préformes (4) le long d'un trajet traversant l'enceinte, les préformes (4) présentant un corps (6) s'étendant selon une direction transversale par rapport au trajet, et une succession d'éléments de chauffage (26) distribués en matrice le long du trajet et selon la direction transversale, lesdits éléments de chauffage (26) étant aptes à émettre une puissance de chauffage maximale correspondant à l'addition des puissances de chauffage de chaque élément de chauffage (26), le réglage de la station de chauffage (14) pour appliquer la quantité d'énergie théorique comprenant le calcul d'une fraction de ladite puissance de chauffage maximale correspondant à ladite quantité d'énergie théorique en fonction du temps d'exposition d'une préforme (4) aux éléments de chauffage (26) le long du trajet et la répartition de ladite fraction sur au moins une partie desdits éléments de chauffage (26) et le réglage de la station de chauffage (14) pour appliquer la quantité d'énergie ajustée comprenant le calcul d'une fraction ajustée de ladite puissance de chauffage maximale correspondant à ladite quantité d'énergie ajustée en fonction du temps d'exposition d'une préforme (4) aux éléments de chauffage (26) le long du trajet et la répartition de ladite fraction ajustée sur au moins une partie desdits éléments de chauffage (26), ladite répartition de la fraction ajustée formant un paramètre de réglage de la station de chauffage.

5. Procédé de paramétrage selon la revendication 4, dans lequel la répartition d'une fraction de la puissance de chauffage maximale comprend la sélection d'éléments de chauffage (26) à allumer le long du trajet et l'alimentation desdits éléments de chauffage (26) à une puissance de chauffage voisine de leur puissance maximale.

6. Procédé de paramétrage selon la revendication 5, dans lequel l'augmentation de la quantité d'énergie au cours de l'étape de réglage de la station de chauffage (14) pour appliquer la quantité d'énergie ajustée comprend la sélection et l'alimentation d'éléments de chauffage (26) supplémentaires et dans lequel la diminution de la quantité d'énergie au cours de l'étape de réglage de la station de chauffage pour appliquer la quantité d'énergie ajustée comprend la sélection et l'extinction d'éléments de chauffage (26) parmi les éléments de chauffage (26) sélectionnés et/ou la modification de la puissance de chauffage d'au moins une partie desdits éléments de chauffage (26).

7. Procédé de paramétrage selon l'une quelconque des revendications 1 à 6, dans lequel le paramètre d'entrée relatif au modèle de préforme (4) introduit dans l'installation comprend la masse et la hauteur d'au moins une partie de la préforme (4) mesurée selon l'axe (A) de ladite préforme, ladite partie de préforme étant la partie de la préforme (4) destinée à être chauffée dans la station de chauffage (14).

8. Procédé de paramétrage selon l'une quelconque des revendications 1 à 7, dans lequel le paramètre lié à la température de la préforme chauffée dans la station de chauffage (14) comprend la température mesurée en une zone donnée de la préforme (4).

9. Procédé de réglage initial d'une installation de production (1) d'une succession de récipients (2) d'un modèle de récipient donné à partir d'une succession de préformes (4) en matière plastique d'un modèle de préforme donné, ladite installation comprenant une station de chauffage (14) de ladite succession de préformes (4), dans laquelle ladite succession de préformes (4) est chauffée à une température de référence, et une machine de formage (16) de ladite succession de préformes (4) chauffées à ladite température de référence, dans laquelle les préformes (4) de ladite succession de préformes sont successivement formées en récipients (2), le procédé de réglage comprenant les étapes suivantes :
- déterminer au moins un paramètre de réglage du chauffage permettant à la station de chauffage (14) de chauffer la succession de préformes (4) conformes audit modèle de préforme donné à ladite température de référence au moyen du procédé de paramétrage d'une station de chauffage (14) selon l'une quelconque des revendications 1 à 8,
- déterminer au moins un paramètre de récipient relatif au modèle de récipient à produire à partir dudit modèle de préforme donné,
- déterminer au moins un paramètre de réglage du formage permettant à la machine de formage (16) de réaliser une succession de récipients conformes audit modèle de récipients à partir de ladite succession de préformes chauffées à ladite température de référence,
- régler ladite installation de production (1) selon lesdits paramètres de préforme, de récipient, de réglage du chauffage et de réglage du formage.

10. Procédé de réglage selon la revendication 9, dans lequel l'étape de détermination d'au moins un paramètre de réglage de la machine de formage (16) comprend le calcul dudit paramètre à partir de formules préenregistrées et desdits paramètres d'entrées, lesdites formules liant au moins le paramètre d'entrée relatif au modèle de préforme au paramètre d'entrée relatif au modèle de récipient à produire en fonction du paramètre de réglage du formage.

11. Programme d'ordinateur comprenant des instructions logicielles, qui, lorsqu'elles sont exécutées par un calculateur (20) de l'installation de production, permettent le calcul de la quantité d'énergie ajustée à apporter à une préforme en fonction de l'écart entre la température réelle de la préforme à l'issue de l'étape de chauffage et la température de référence pour la mise en oeuvre d'un procédé de paramétrage selon l'une quelconque des revendications 1 à 8.
